# EUROPEAN PATENT SPECIFICATION

(11) **EP 3 015 239 B1**
(45) Date of publication and mention of the grant of the patent: **19.05.2021**
(21) Application number: 14191454.9
(22) Date of filing: 03.11.2014
(51) Int. Cl.: B29C 33/68, C09D 5/20, C08J 9/00

(54) **PEELABLE, FLEXIBLE AND TRANSPARENT PROCESS LINER**
ABZIEHBARE, FLEXIBLE UND TRANSPARENTE VERFAHRENSAUSKLEIDUNG
GAINE DE TRAITEMENT, PELABLE, FLEXIBLE ET TRANSPARENT

(43) Date of publication of application: 04.05.2016
(73) Proprietor: Mondi AG, 1030 Wien (AT)
(72) Inventor: FORSBERG, Ola, 68630 Sunne (SE); GUSTAVSSON, Kent, 70213 Örebro (SE)
(74) Representative: Hoffmann Eitle

(56) References cited:
- DE-A1- 1 778 946
- US-A1- 2010 055 371
- DATABASE WPI Week 198336 Thomson Scientific, London, GB; AN 1983-756379 XP002739408, & JP S58 128851 A (SUMITOMO CHEM CO LTD) 1 August 1983 (1983-08-01)
- DATABASE WPI Week 200610 Thomson Scientific, London, GB; AN 2006-093723 XP002739409, & JP 2006 001013 A (INOAC CORP KK) 5 January 2006 (2006-01-05)
- DATABASE WPI Week 200165 Thomson Scientific, London, GB; AN 2001-575146 XP002739410, & JP 2001 212842 A (IDEMITSU PETROCHEM CO LTD) 7 August 2001 (2001-08-07)

## Description

### Technical field

The present invention relates to a process for continuously foaming plastics and to a process liner useful in this process.

### Background of the invention

Foamed plastic blocks or slabs can be prepared in a continuous process, wherein the foaming space is delimited by means of process liner sheets. In the process, a bottom process liner defines the base of the foam block to be produced. Further to the bottom process liner, there are also side process liners which define the side walls of the block, and optionally, there may also be a top process liner defining the top of the block.

These process liners are supplied on storage reels, continually unwound from said reels and advanced on the conveyor belts along production line. The foamable starting material is applied onto the bottom process liner and foamed along the production line inside the space delimited by said process liners. At the end of the production line, the process liners are detached from the foamed block or sheet thus obtained, and wound onto waste liner reels.

Conventional process liners can be made of paper, which may be coated with a non-peelable or peelable polymer layer, or of polymer films.

The uncoated conventional paper liners, i.e. untreated paper liners are cheap and easily available. However, there are several disadvantages to using untreated paper liners for a process for the continuous foaming of plastics. The paper does not provide a barrier function to prevent the absorption of the chemicals that are used during the foaming process into the paper, which leads to a loss of foamable starting material and to a contamination of waste paper. The contaminated paper cannot be recycled or used as paper pulp in paper mills in consequence resulting in disposal problems. A further disadvantage is that if pure paper is used, volatile chemicals that are released by the components subjected to the foaming process can evaporate, resulting in a changed ratio of components, which impacts the physical properties of the foam. Another problem of untreated paper liners is that the cured foam sticks to the paper liner which results in a waste of foam material when the paper is removed from the block and further causes problems when rewinding the liner onto a reel at the end of the process.

Paper liners may be coated with silicone to prevent the foam from sticking to the liner. Yet, the silicone coating does not provide a barrier function to prevent the absorption of chemicals that are used during the foaming process into the paper, resulting, as explained above, in a waste of material and in disposal problems.

Polyethylene treated paper liners can be categorised into non-peelable polyethylene coated paper liners and peelable polyethylene coated paper liners. The polyethylene coated paper liners provide an improvement over the conventional paper liners as they provide a barrier function, meaning that no chemicals are absorbed into the paper. The non-peelable polyethylene treated paper liners have the disadvantage however, that the foam sticks to the liner, resulting in a waste of material and in disposal problems.

EP 00 84 384 addresses this problem by means of a paper liner having a thin, peelable polymer layer, which can be easily detached from the paper at the end of the production line and remains attached to the foamed block.

Since they are not transparent, the paper-based process liners have the disadvantage that a visual inspection of the produced foamed block or slab along the production line is not possible. Besides, paper has a tendency to break or rupture easily. In order to prevent tearing of the paper based liners, thicker paper would have to be used as a base which in turn would make the folding of the liner more difficult.

Thus, alternative process liners may be made of polymer films, typically HDPE or LDPE, which do not break as easily as paper and are transparent, allowing a visual inspection of the produced foam. The polymer film also provides a barrier function. However, in order to have satisfactory mechanical properties for use as a process liner, the film requires a certain minimum thickness. Thus, the film cannot simply remain on the foamed block like in EP 00 84 384, but has to be removed at the end of the production line. Since the foamed material has a tendency to stick to the polyethylene, this may lead to a loss of material.

JP-S58-128851 concerns a laminate that may be placed between uncured rubber sheets to prevent adherence of the sheets to each other. The laminate comprises a substrate and an LDPE film which is positioned on either side of the substrate. Examples of the substrate include a film made of polyester, polyamide, polypropylene or HDPE.

US 2010-055371 discloses a multi-laver dry-paint transfer laminate which includes a release liner comprising a carrier and an olefinic release layer, which is adhered to or integral with the flexible carrier.

### Problem to be solved

The present invention seeks to solve the above problems of finding a process liner with good mechanical properties as well as good flexibility, which is transparent, provides a barrier function against moisture and loss of chemical compounds and does not result in waste of material.

### Solution

The process liner of the present invention comprises a support film (A) and a peelable polyolefin film (B) coated thereon, as described below.

In the process liner of the present invention, the support film (A) is transparent and provides the mechanical properties required for processing the foamed material along the production line.

The peelable polyolefin film (B) can easily be peeled off from the support film at the end of the production line, and is sufficiently thin to remain on the produced foam block or slab after the foaming process.

Thus, the present invention provides a process liner which has transparency and good mechanical properties and does not exhibit the problems associated with the removal of conventional polymer film based process liners from the produced foamed block or slab.

### Summary of the Invention

The present invention provides a process liner for the preparation of foamed plastic blocks or slabs, comprising a transparent support polymer film (A) and a transparent peelable polyolefin film (B) provided thereon, wherein the support film (A) has a weight per area of 10-100 g/m² and is made of a polymer having a melting point of 150°C or more according to DSC measurements; the polymer of the support film (A) being polyamide, polypropylene, polyethylene terephthalate or any combination thereof, the transparency of the support polymer film (A) according to ASTM-D-1003-61 method A being 60% or higher; and wherein the peelable polyolefin film (B) has a weight per area of 10-50 g/m² and the melting point of the peelable polyolefin film (B) is 90 to 130 °C.

The process liner of the present invention can be prepared by extrusion coating. The method for producing the liner includes the steps of extruding the molten polyolefin of the peelable polyolefin film (B) onto the support film (A) through a die. This is followed by pressing the obtained support film (A) having the polyolefin film coated thereon with a pressure roller at a pressure of 210 to 260 kN/m².

Further, the present invention provides a process for the preparation of foamed plastic blocks or slabs in a continuous production line. The process for the preparation of foamed plastic blocks or slabs comprises continuously bringing a foamable plastic raw material into contact with at least one process liner of the present invention. The process liner is then conveyed with the foamed plastic raw material along the production line while continuously foaming the raw material and allowing the foamed material to set. During this process the peelable polyolefin film (B) of the process liner of the present invention comes into contact with the foamable plastic raw material; and after the setting of the foamed material, the support film (A) of the process liner is continuously detached, while a part or the entirety of the peelable polyolefin film (B) remains attached to the foamed material.

### Advantages of the present invention

The inventors have found that a process liner of the present invention exhibits excellent mechanical properties including tear strength, dimensional stability and flexibility while being transparent and allowing easy separation from the produced foam material.

Because of the excellent mechanical properties, the risk of web breaks is reduced. This also lowers the risk of chemical exposure to cyanides and polyols that are commonly used in the process, consequently improving the safety of the workers handling the machine.

The polymeric films comprised in the process liner of the present invention have good barrier properties. They do not allow chemicals used during the process to pass through the liner or to evaporate through it, thus preventing a contamination of the product line and reducing the health hazard due to toxic fumes. Another advantage of the inventive process liner is that the peelable polyolefin film (B) stays on the slabstock when the support polymer film is removed at the end of the foaming process, thus reducing waste as no foam pick off occurs.

Since the process liner of the present invention is transparent it allows a visual quality control of the slabstock during the foaming process. Thus, the process itself can be adjusted and optimised, ensuring the quality of the foamed material.

### Detailed description of the invention

The process liner of the present invention comprises a support polymer film (A) that is coated with a peelable polyolefin film (B). The peelable polyolefin film (B) comes into contact with the foam material during the production process thereof and adheres thereto.

Peelable thereby means that a force of 0.01 to 0.15 N/50 mm, measured according to ISO 9073-3 EDANA, is needed to detach peelable polyolefin film (B) from the support polymer film (A). The peelability can be attained by the process for producing a process liner as described below.

### Support polymer film (A)

The support polymer film (A) has a weight per area of 10 to 100 g/m², preferably 14 to 50 g/m² and even more preferably 17 to 25 g/m². If the weight per area is within the above-specified range, the process liner has good mechanical properties and transparency. If the support polymer film (A) has a weight per area below 10 g/m², the resulting decrease of thickness may lead to a breaking or tearing of the liner in the course of the preparation process for the foam material. If the support polymer film (A) has a weight per area above 100 g/m², the resulting increase of thickness may lower the transparency, may lead to difficulties when winding the liner onto reels as it may increase the stiffness of the liner which might lead to wrinkles when the liner is wound onto a reel, and may lead to an increase in cost as less liner material can be provided on one reel.

Films having such a basis weight usually have a thickness of 7 to 70 µm, preferably 10 to 36 µm and more preferably 12 to 15 µm, depending on the material of the film.

The support polymer film (A) may be a non-oriented film or an oriented film, wherein the orientation may be uniaxial or biaxial. Uniaxial orientation means a longitudinal orientation of the polymer chains of the polymer film by stretching the film in one direction (machine direction). Biaxial orientation means the stretching of the polymer film in two directions (machine direction and transverse direction). The stretching leads to a chain orientation of the linear polymer chain in the film. This untangles the polymer chains and facilitates their parallel alignment, leading to oriented crystalline domains and aligning amorphous domains in the film. The stretching improves the mechanical properties of the film. Thus, oriented films are preferable, and biaxially-oriented films are particularly preferable because of their good mechanical properties.

As regards the mechanical properties of the support polymer film (A) the tensile strength in machine direction (MD) is preferably in the range of 1000 to 3000 kg/cm², more preferably 1500 to 2500 kg/cm², the Young's modulus in MD is preferably in the range of 10,000 to 20,000 kg/cm², more preferably 13,000 to 17,000 kg/cm² and the elongation at break point in MD is preferably in the range of 50 to 250%, more preferably 90 to 130%. Tensile strength, Young's modulus and elongation at break point are measured according to ISO 527-1. The above properties can be adapted by drawing the polymer film in MD.

To make sure that the support polymer film (A) exhibits sufficient transparency for final inspection, opaque additives are not allowed to be included in higher amounts. The transparency value of the support polymer film (A) is 60% or higher, referably 80% or higher, even more preferably 85% or higher and the haze value should preferably be 10.0% or less, more preferably 5% or less and even more preferably 3% or less. The transparency and haze value are measured according to ASTM-D-1003-61 method A.

During the foaming process the process temperature for foam production can be between 90 °C and 130 °C on the surface of the foam block. Thus, if the support polymer film is made of a polymer having a melting point below 130 °C, the film might melt leading to the film breaking or bending out of shape. Thus, support polymer film (A) is made of a polymer having a melting point of 130 °C or more, preferably 150 °C or more, more preferably 180 °C or more. The melting point of the polymer of the support polymer film (A) may be measured by DSC.

The polymer of the support polymer film (A) is selected from polyethylene terephthalate (PET), polyamide, polypropylene or any combination thereof. PET is preferable in view of availability and mechanical properties.

The support polymer film (A) may be a single layer film or a multilayer film. In addition, the support polymer film (A) may contain additives such as plasticisers, stabilisers or fillers.

The support polymer film (A) may be produced for example with cast film technology or blow film technology. Biaxial orientation of the support polymer film (A) can be achieved by stretching of the film into machine direction (MD) and cross direction (CD). The stretching may be carried out for example in a tenter frame process or a so called double bubble process.

As an example for PET films, biaxially-oriented multilayer PET such as Hostaphan ® RNK available from Mitsubishi Polyester Film GmbH, F-PAP-012,0-X.X-B.UT and F-PAP-012,0-X.X-B.CT available from Flex Films, TF and TFC available from Polyplex, or J200 and J700 available from Jindal Poly are mentioned.

As an example for the polypropylene film, plain or coated biaxially-oriented polypropylene films such as NO and N1BG available from Jindal Poly, BTHFP1 available from Polyplex, GLT available from Innovia, or TSS available from Taghleef are mentioned.

As an example for the polyamide, biaxially-oriented polyamide such as NP03 available from Kolon is mentioned.

### Peelable polyolefin film (B)

The peelable polyolefin film (B) has a weight per area of 10-50 g/m² and is made of a polyolefin having a melting point lower than the melting point of the polymer of the support film (A) by 10 °C or more. For instance, if the melting point of the polymer of the support polymer film (A) is 150 °C, then the polymer of the peelable polyolefin film (B) has to be 140 °C or less.

As the process temperature of the foam production is between 90 °C and 130 °C on the surface of the foam block, it is preferable that the peelable polyolefin film (B) has a either a melting point or a Vicat temperature of 130 °C or less, preferably 120 °C or less and even more preferably be 110 °C or less, in order to achieve a good adhesion of the peelable polyolefin film (B) to the foam block.

The peelable polyolefin film (B) has a weight per area of 10-50 g/m², preferably 12-30 g/m² and most preferably 15-25 g/m². If the weight per area is within 10-50 g/m², the process liner has the required mechanical strength/tear resistance and transparency. If the peelable polyolefin film (B) has a weight per area below 10 g/m², the resulting decrease of thickness may make it difficult to peel the support film (A) from the polyolefin film (B). To make sure that the peelable polyolefin film (B) exhibits sufficient transparency for final inspection, opaque additives are not allowed to be included in higher amounts.

If the peelable polyolefin film (B) has a weight per area above 50 g/m² the resulting increase of thickness may lower the transparency, and could lead to a waving or curling when the process liner is coiled. Further, if the peelable polyolefin film (B) has a weight per area above 50 g/m², thickness of the film will become too large, so that it cannot remain attached to the foam block, but has to be removed. Since the foamed material has a tendency to stick to the peelable polyolefin film (B) this may lead to a loss of material.

Accordingly, depending on the density of the polymer, the peelable polyolefin film (B) has a thickness of for example 10-55 µm, preferably 16-27 µm. Such a thickness, as achieved by the above basis weight, is relevant in view of the required mechanical strength/tear resistance and transparency of the process liner.

The peelable polyolefin film (B) comprises for example olefin homo- or copolymers. In view of the melting point requirements, Vicat temperature and elasticity, the polyolefin is preferably a polyethylene-based homo- or copolymer. The polyethylene based polymer may be made from HDPE (high density polyethylene) or LDPE (low density polyethylene) or a blend thereof.

The melt flow index (MFI), measured according to ISO 1133, of LDPE is preferably between 4 and 15 g/10 min at a temperature of 190 °C and a load of 2.16 kg and the LDPE preferably has a density of 0.912 to 0.925 g/cm³ measured according to ISO 1183. The MFI, measured according to ISO 1133, of HDPE is preferably between 7 and 13 g/10 min at a temperature of 190 °C and a load of 2.16 kg and the HDPE preferably has a density of 0.94 to 0.96 g/cm³ measured according to ISO 1183. If the MFI values are inside these ranges, the extrusion coating onto the support polymer film (A) by the below-described process is facilitated.

The LDPE and HDPE preferably have a melting point, DSC measurement according to ISO 3146, between 100 °C and 132 °C and preferably have a Vicat temperature, measured according to ISO 306, between 80 °C and 129 °C, in order to facilitate the extrusion coating and allow a good adhesion to the foam blocks.

According to the invention the peelable polyolefin film (B) may be a single layer film or a multilayer film. When preparing the peelable polyolefin film (B) by extrusion coating of the support film (A) by the process described below, a single layer is typically obtained. A multilayer may be obtained by multiple extrusion coatings.

In addition, the peelable polyolefin film (B) may contain additives such as plasticisers, stabilisers or fillers.

### Process liner

The process liner of the invention comprises the support film (A), which is coated by the peelable polyolefin film (B). It is typically supplied on a reel.

When winding the process liner onto the reel, care must be taken for the layers of support film (A) and peelable polyolefin film (B) not to curl or crimp and the peelable polyolefin film (B) not to detach from the support film (A) because of mechanical tension from the different radii of the two films. According to the invention, this is achieved by using films (A) and (B) having the properties as defined above.

The peel force between support polymer film (A) and the peelable polyolefin film (B) is preferably in the range of 0.01 to 0.15 N/50mm according to ISO 9073-3 EDANA. If the peel force is above 0.15 N/50 mm the peelable polyolefin film (B) adheres strongly to support polymer film (A), so that it may become more difficult to detach peelable polyolefin film (B) from the support film (A). If the peel force is below 0.01 N/50 mm, it may become more difficult to prevent a curling or crimping of the peelable polyolefin film (B) when winding the process liner onto a reel. The peelability of peelable polyolefin film (B) can be attained by the process for producing a process liner as described below.

To perform the foaming process in an efficient manner the liner is usually provided on a reel from which the liners are released towards the start of the foaming process. Whenever a reel runs out of liner the process has to be stopped to insert a reel with new liner. The thickness of the process liner has an influence on the amount of process liner that can be wound up onto the reels. The thinner the liner, the more of the liner can be wound up. This substantially increases the overall efficiency of the process as the line has to be stopped less frequently for changing of reels.

The width and the length of the process liner of the present invention are typically 0.6 to 3.0 m and 4,000 to 10,000 m, respectively.

### Preparation of the process liner

The process liner of the present invention is obtainable by an extrusion coating process as described in the following.

In the extrusion coating process, the support polymer film (A) is continuously conveyed along the production line, while the molten polyolefin of the peelable polyolefin film (B) is extruded through a die onto the support polymer film (A). The obtained support film (A) having the polyolefin film (B) coated thereon is then cooled, e.g. by propagating it around a chill roll, and pressurized by pressing it with a pressure roller at a pressure of 210 to 260 kN/m².

The support polymer film (A) is typically supplied on a reel, and propagated at a speed of, e.g. between 150 to 450 m/min, preferably 250 to 350 m/min. The tension of the support polymer film (A) in machine direction is preferably within the range of 80 to 350 N/m², more preferably 90 to 200 N/m², even more preferably 100 to 140 N/m². A tension inside this range is preferable in view of preventing that the process liner becomes curly or wavy, or that the peelable polyolefin film (B) delaminates because of the relaxation of the support film (A).

The polyolefin comprised in the polyolefin film (B) is molten preferably at a temperature between 250 and 330 °C and compressed in one extruder or in as many as 2 to 4 extruders before being pressed as a film out of a die onto support polymer film (A). A temperature inside this range is preferable, as at a temperature above 330 °C the polymer may degrade, cause smoke formation, form an instable polymer film and a reduction in width of the film being extruded, a so called "neck-in effect", may occur. If the temperature is below 250 °C the polymer melt may have high viscosity resulting in a back pressure to the extruders.

To ensure a preferred level of oxidation of the polyolefin film (B) before it is coated onto support polymer film (A) the time in air gap is preferably in the range of 10 to 100 msec, more preferably 40 to 60 msec. A longer time in air gap increases the level of oxidation of the polyolefin film (B). A higher oxidation level leads to stronger adhesion, meaning that it may become more difficult to detach the support polymer film (A) from the peelable polyolefin film (B).

After the extrusion the support film (A) having the polyolefin film (B) coated thereon may be cooled on a chill roll and is subsequently pressed with a pressure roller and counter pressure roller at a pressure of 210 to 260 kN/m². If the pressure is higher than 260 N/m² the adhesion between polymer films (A) and (B) is higher, meaning that the polyolefin film (B) may not have the desired peelable properties in respect to the support polymer film (A), i.e. polyolefin film (B) may not detach from support polymer film (A). If the pressure is lower than 210 N/m², the adhesion between support polymer film (A) and polyolefin film (B) may deteriorate, which could lead to a detachment of the two polymer films during the manipulation of the process liner.

In order to optimise the adhesion between the support polymer film (A) and peelable polyolefin film (B) (and thus the peel force), the process parameters of the extrusion coating, in particular the temperature of the polymer melt, the cooling conditions, the time in air gap and the pressure settings may be appropriately adjusted by the skilled person.

### Process for the preparation of foamed plastic blocks or slabs using the process liner

The process liner according to the present invention is used for the preparation of foamed plastic blocks or slabs in a continuous production line.

In this process, a foamable plastic raw material is continuously brought into contact with at least one process liner of the present invention. The process liner with the foamed plastic raw material is conveyed along the production line while continuously foaming the raw material on the process liner and allows the foamed material to set. The peelable polyolefin film (B) of the process liner as defined above thereby comes into contact with the foamable plastic raw material. After the foamed material has set, the support film (A) of the process liner as defined above is continuously detached and wound onto a waste reel while a part or the entirety of the peelable polyolefin film (B) remains attached to the foamed material.

In order to remain attached to the foamed product, the polyolefin film (B) preferably has a lower melting point or Vicat point than the temperature prevailing in the foaming process, which is typically between 90 and 130 °C.

The support polymer film (A) has a melting temperature above the temperature of the foamed product, allowing support polymer film (A) to remain mechanically stable during the foam production process and to be able to detach from peelable polyolefin film (B) towards the end of the foam production process.

Preferably, the process makes use of at least three process liners, which define the bottom and the sides of the foamed block or slab to be formed. Optionally, a fourth process liner may further limit the top of the foamed block or slab to be formed.

The process liners are usually supplied on a reel and continuously wound off from said reel. At the end of the production line, the waste support polymer film (A), which is continually detached from the peelable polyolefin film (B), again may be wound onto a reel.

Since the process liner is transparent, the foaming process can be observed visually. This allows a visual, continuous quality control of the produced foam material during the production and the respective on-line adjustment of the foaming process conditions. Therefore, a high quality of the foam product can be achieved.

### Measuring Methods

Melting point: The melting point was measured by DSC according to ISO 3146.
MFI: MFI was measured in accordance with ASTM D 1238 at 190 °C under a load of 2.16 kg expressed in g/10 min.
Vicat point: Vicat point was determined according to ISO 306. The Vicat softening temperature describes the temperature at which a 1 mm² flat-ended needle will penetrate 1 mm into a material under a specified load and heating rate (ISO 306, method A50).
Peel force: Peel force measurements were carried out according to ISO 9073-3 EDANA.
Transparency and haze: Transparency and haze value measurements were carried out according to ASTM-D-1003-61 method A.
Thickness: Thickness was measured according to ASTM D1777 ISO 534.
Weight per area: Weight per area was measured according to ASTM D3776 ISO 536.

Tensile strength, Young's modulus and elongation at break measurements were carried out according to ISO 527-1.

Water vapour transmission rate: The water vapour transmission rate (WVTR) was measured according to ASTM 1249 at 25 °C / 75% r.h..

### Examples

Two process liners were produced by extrusion coating of a polyethylene film onto two different types of PET-films. The PET films used were F-PAP-012,0-X.X-B.UT and Polyplex TFC.

### Example 1

A polyethylene having a MFI as determined in accordance with ASTM D 1238 at 190 °C under a load of 2.16 kg of 7.5 g/10 min, a density of 0.919 g/cm³, a melting point of 105 °C (hereinafter referred to as LDPE) was melted using a 152.4 mmΦ extruder (Davis Standard (Er-We-Pa) 6" screw). Thereafter, using an Er-We-Pa machine having a die length of 3350 mm (Cloeren 3350 mm EBR™ IV Auto Gauge™) the LDPE composition was extruded at a resin temperature of 280 °C, at a cooling air temperature of 23 °C, an extruder pressure of 7500 kN/m² and with an air gap of 260 mm onto an F-PAP-012,0-X.X-B.UT PET film (support polymer film (A)) at a coating weight of 15 g/m² and a propagating speed of the PET film (support polymer film (A)) of 300 m/min.

The PET film (support polymer film (A)) having the LDPE film (polyolefin film (B)) coated thereon was then cooled on a chill roll(22 °C) before being pressed between a pressure roller and counter pressure roller at a pressure of 260kN with a web tension of 125 N/m.

The obtained process liner has the properties shown in Table 1 below, wherein the properties shown concern the process liner (film (A)+(B)) unless otherwise indicated.

**Table 1**

| Property | Unit | Example 1 |
|---|---|---|
| Total basis weight (film (A)+(B)) | g/m² | 32,2 |
| Basis weight support film (A) | g/m² | 17 |
| Basis weight peelable polyolefin film (B) | g/m² | 15,2 |
| Thickness | µm | 28 |
| Tensile strength MD | kN/m | 19,2 |
| Tensile strength CD | kN/m | 20 |
| Stretch MD | % | 100 |
| Stretch CD | % | 800 |
| Burst strength | kPa | 380 |
| Adhesion | N/50 mm | 0,05 |
| WVTR | g/m²/24 h | 2 |

### Example 2

The same procedure was carried out as in Example 1 with the exception that a Polyplex TFC PET film was used as support polymer film (A).

The obtained process liners of Example 1 and 2 were successfully used for preparing foamed polyurethane slabstock.

The process liner of Example 1 was used in the production of foamed slabstock, wherein the production was performed on a Hennecke J-flex continuous foam slab machine. The foamed product raw material used was polyurethane with a foam density setting of 19 kg/m³ containing calcium carbonate as process filler.

The process liner of Example 2 was used in the production of foamed slabstock, wherein the production was performed on a Hennecke QFM continuous foam slab machine. The foamed product raw material used was polyurethane with a foam density setting of 25 kg/m³.

## Claims

1. A process liner for the preparation of foamed plastic blocks or slabs, comprising a transparent support polymer film (A) and a transparent peelable polyolefin film (B) provided thereon,
wherein the support polymer film (A) has a weight per area of 10 to 100 g/m² and is made of a polymer having a melting point of 150 °C or more according to DSC measurement pursuant to ISO 3146; the polymer of the support film (A) being polyamide, polypropylene, polyethylene terephthalate or any combination thereof, the transparency of the support polymer film (A) according to ASTM-D-1003-61 method A being 60% or higher; and
wherein the peelable polyolefin film (B) has a weight per area of 10-50 g/m², and the melting point of the peelable polyolefin film (B) is 90 to 130 °C.

2. The process liner according to claim 1, wherein the support film (A) has a tensile strength of 1000 to 3000 kg/cm² in machine direction, measured according to ISO 527-1.

3. The process liner according to claim 1 or 2, wherein the support film (A) and/or the peelable olefin film (B) is a multilayer film.

4. The process liner according to any of the claims 1 to 3, wherein the peelable polyolefin film (B) is made of polyethylene.

5. The process liner according to claim 4, wherein the polyethylene is LDPE, HDPE or a combination thereof.

6. Use of the process liner as defined in any of the claims 1 to 5 as a liner in the production of foamed plastic blocks or slabs.

7. Process for the preparation of foamed plastic blocks or slabs in a continuous production line, comprising:
continuously bringing a foamable plastic raw material into contact with at least one process liner;
conveying the process liner with the foamed plastic raw material along the production line while continuously foaming the raw material and allowing the foamed material to set;
wherein:
the process liner is the process liner as defined in any of the claims 1 to 5,
the peelable polyolefin film (B) of the process liner comes into contact with the foamable plastic raw material; the temperature on the surface of the material being 90 to 130°C; and
after the setting of the foamed material, the support film (A) of the process liner is continuously detached, while a part or the entirety of the peelable polyolefin film (B) remains attached to the foamed material.

8. The process according to claim 7, wherein the foamable raw material is brought into contact with at least three process liners, which define the bottom and the sides of the foamed block or slab to be formed.

9. The process according to claim 7 or 8, wherein at least one process liner is provided on a reel and continuously wound off from said reel.

10. The process according to any of the claims 7 to 9, wherein the detached support film (A) is continuously wound onto a roll.

11. The process according to any one of claims 7 to 10 wherein the peelable polyolefin film (B) has a Vicat temperature, measured according to ISO 306, lower than the process temperature of the foam production.

12. A method for producing a process liner as defined in to any one of claims 1 to 5 by extrusion coating, including the steps of
extruding the molten polyolefin of the peelable polyolefin film (B) onto the support film (A) through a die; and pressing the obtained support film (A) having the polyolefin film coated thereon with a pressure roller at a pressure of 210 to 260 kN/m².

13. The method for producing a process liner according to claim 12, wherein the temperature for melting the polymer for forming the peelable polyolefin film (B) is between 270 °C and 360 °C.

## Patentansprüche

1. Prozess-Liner zur Herstellung von geschäumten Kunststoffblöcken oder geschäumten Kunststoffplatten, umfassend eine transparente Polymerträgerfolie (A) und darauf angeordnet eine transparente abziehbare Polyolefinfolie (B),
wobei die Polymerträgerfolie (A) ein Flächengewicht von 10 bis 100 g/m² aufweist und aus einem Polymer mit einem Schmelzpunkt von 150°C oder mehr gemäß DSC-Messung nach ISO 3146 hergestellt ist; wobei das Polymer der Trägerfolie (A) Polyamid, Polypropylen, Polyethylenterephthalat oder eine beliebige Kombination davon ist, wobei die Transparenz der Polymerträgerfolie (A) gemäß ASTM-D-1003-61 Methode A 60% oder höher ist; und
wobei die abziehbare Polyolefinfolie (B) ein Flächengewicht von 10 bis 50 g/m² aufweist, und der Schmelzpunkt der abziehbaren Polyolefinfolie (B) 90 bis 130°C beträgt.

2. Prozess-Liner gemäß Anspruch 1, wobei die Trägerfolie (A) eine Zugfestigkeit von 1000 bis 3000 kg/cm² in Maschinenrichtung, gemessen nach ISO 527-1, aufweist.

3. Prozess-Liner gemäß Anspruch 1 oder 2, wobei die Trägerfolie (A) und/oder die abziehbare Olefinfolie (B) eine Mehrschichtfolie ist.

4. Prozess-Liner gemäß einem der Ansprüche 1 bis 3, wobei die abziehbare Polyolefinfolie (B) aus Polyethylen ist.

5. Prozess-Liner gemäß Anspruch 4, wobei das Polyethylen LDPE, HDPE oder eine Kombination davon ist.

6. Verwendung des Prozess-Liners, wie in einem der Ansprüche 1 bis 5 definiert, als Liner bei der Herstellung von geschäumten Kunststoffblöcken oder geschäumten Kunststoffplatten.

7. Verfahren zur Herstellung von geschäumten Kunststoffblöcken oder geschäumten Kunststoffplatten in einer kontinuierlichen Produktionslinie, umfassend:
das kontinuierliche Inkontaktbringen eines schäumbaren Kunststoffrohmaterials mit mindestens einem Prozess-Liner;
das Fördern des Prozess-Liners mit dem geschäumten Kunststoffrohmaterial entlang der Produktionslinie, während das Rohmaterial kontinuierlich geschäumt wird, und das Erhärten des geschäumten Materials;
wobei:
der Prozess-Liner der Prozess-Liner, wie in einem der Ansprüche 1 bis 5 definiert, ist,
die abziehbare Polyolefinfolie (B) des Prozess-Liners mit dem schäumbaren Kunststoffrohmaterial in Kontakt kommt; wobei die Temperatur an der Oberfläche des Materials 90 bis 130°C beträgt; und
nach dem Erhärten des geschäumten Materials die Trägerfolie (A) des Prozess-Liners kontinuierlich abgelöst wird, während ein Teil oder die Gesamtheit der abziehbaren Polyolefinfolie (B) an dem geschäumten Material befestigt bleibt.

8. Verfahren gemäß Anspruch 7, wobei das schäumbare Rohmaterial mit mindestens drei Prozess-Linern in Kontakt gebracht wird, die den Boden und die Seiten des zu formenden geschäumten Blocks oder der zu formenden geschäumten Platte definieren.

9. Verfahren gemäß Anspruch 7 oder 8, wobei mindestens ein Prozess-Liner auf einer Rolle angeordnet ist und kontinuierlich von dieser Rolle abgewickelt wird.

10. Verfahren gemäß einem der Ansprüche 7 bis 9, wobei die abgelöste Trägerfolie (A) kontinuierlich auf eine Rolle aufgewickelt wird.

11. Verfahren gemäß einem der Ansprüche 7 bis 10, wobei die abziehbare Polyolefinfolie (B) eine Vicat-Temperatur, gemessen nach ISO 306, aufweist, die niedriger als die Prozesstemperatur der Schaumstoffherstellung ist.

12. Verfahren zur Herstellung eines Prozess-Liners, wie in einem der Ansprüche 1 bis 5 definiert, durch Extrusionsbeschichten, umfassend die Schritte des
Extrudierens des geschmolzenen Polyolefins der abziehbaren Polyolefinfolie (B) auf die Trägerfolie (A) durch eine Düse; und des Pressen der erhaltenen Trägerfolie (A) mit der darauf beschichteten Polyolefinfolie mit einer Druckwalze bei einem Druck von 210 bis 260 kN/m².

13. Verfahren zur Herstellung eines Prozess-Liners gemäß Anspruch 12, wobei die Temperatur zum Schmelzen des Polymers zur Bildung der abziehbaren Polyolefinfolie (B) zwischen 270°C und 360°C liegt.

## Revendications

1. Gaine de traitement pour la préparation de blocs ou de dalles en plastique expansé, comprenant un film polymère de support transparent (A) et un film de polyoléfine pelable transparent (B) disposé sur celle-ci,
dans laquelle le film polymère de support (A) présente un poids par aire de 10 à 100 g/m² et est composé d'un polymère présentant un point de fusion de 150 °C ou plus selon une mesure par DSC conformément à la norme ISO 3146; le polymère du film de support (A) étant un polyamide, le polypropylène, le polyéthylène téréphtalate ou n'importe quelle combinaison de ceux-ci, la transparence du film polymère de support (A) selon le procédé A ASTM-D-1003-61 étant de 60 % ou plus élevée ; et
dans laquelle le film de polyoléfine pelable (B) présente un poids par aire de 10-50 g/m², et le point de fusion du film de polyoléfine pelable (B) est de 90 à 130 °C.

2. Gaine de traitement selon la revendication 1, dans laquelle le film de support (A) présente une résistance à la traction de 1 000 à 3 000 kg/cm² dans une direction de machine, mesurée selon la norme ISO 527-1.

3. Gaine de traitement selon la revendication 1 ou 2, dans laquelle le film de support (A) et/ou le film d'oléfine pelable (B) sont un film multicouche.

4. Gaine de traitement selon l'une quelconque des revendications 1 à 3, dans laquelle le film de polyoléfine pelable (B) est composé de polyéthylène.

5. Gaine de traitement selon la revendication 4, dans laquelle le polyéthylène est le LDPE, le HDPE ou une combinaison de ceux-ci.

6. Utilisation de la gaine de traitement telle que définie dans l'une quelconque des revendications 1 à 5 comme gaine dans la production de blocs ou de dalles en plastique expansé.

7. Processus pour la préparation de blocs ou de dalles en plastique expansé dans une ligne de production continue, comprenant :
la mise de manière continue d'une matière première en plastique expansible en contact avec au moins une gaine de traitement ;
le transport de la gaine de traitement avec la matière première en plastique expansé le long de la ligne de production tout en moussant de manière continue la matière première et en permettant au matériau expansé de prendre ;
dans lequel :
la gaine de traitement est la gaine de traitement telle que définie dans l'une quelconque des revendications 1 à 5,
le film de polyoléfine pelable (B) de la gaine de traitement vient en contact avec la matière première en plastique expansible ; la température sur la surface du matériau étant de 90 à 130 °C ; et
après la prise du matériau expansé, le film de support (A) de la gaine de traitement est détaché de manière continue pendant qu'une partie ou l'entièreté du film de polyoléfine pelable (B) reste fixée au matériau expansé.

8. Processus selon la revendication 7, dans lequel la matière première expansible est mise en contact avec au moins trois gaines de traitement, qui définissent le fond et les côtés du bloc expansé, ou de la dalle expansée, à former.

9. Processus selon la revendication 7 ou 8, dans lequel au moins une gaine de traitement est disposée sur une bobine et dévidée de manière continue de ladite bobine.

10. Processus selon l'une quelconque des revendications 7 à 9, dans lequel le film de support détaché (A) est enroulé de manière continue sur un rouleau.

11. Processus selon l'une quelconque des revendications 7 à 10, dans lequel le film de polyoléfine pelable (B) présente une température de ramollissement Vicat, mesurée selon la norme ISO 306, inférieure à la température de traitement de la production de mousse.

12. Procédé de production d'une gaine de traitement telle que définie dans l'une quelconque des revendications 1 à 5 par couchage par extrusion, incluant les étapes consistant
à extruder la polyoléfine fondue du film de polyoléfine pelable (B) sur le film de support (A) au moyen d'une filière ; et à presser le film de support obtenu (A) sur lequel est revêtu le film de polyoléfine, avec un rouleau de pression à une pression de 210 à 260 kN/m².

13. Procédé de production d'une gaine de traitement selon la revendication 12, dans lequel la température pour fondre le polymère pour former le film de polyoléfine pelable (B) est entre 270 °C et 360 °C.
